(19) Europäisches Patentamt

European Patent Office

Office européen des brevets

(11) EP 1 072 459 A1

(12) **DEMANDE DE BREVET EUROPEEN**

(43) Date de publication:
**31.01.2001 Bulletin 2001/05**

(51) Int Cl.[7]: **B60K 41/02**, F16D 48/08

(21) Numéro de dépôt: **00402075.6**

(22) Date de dépôt: **21.07.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **27.07.1999 FR 9909735**

(71) Demandeur: **Renault**
**92100 Boulogne Billancourt (FR)**

(72) Inventeurs:
• **Peton, Anne-Catherine**
  **78280 Guyancourt (FR)**
• **Claverie, Jean**
  **75006 Paris (FR)**

(54) **Dispositif de commande du démarrage d'un véhicule automobile**

(57) Le véhicule est propulsé par un moteur (3) à combustion interne comprenant des moyens d'asservissement (2) du couple délivré par le moteur (3) et des moyens de pilotage (5) d'un embrayage (6) à disques et butée formant partie d'un mécanisme de transmission d'énergie mécanique entre ledit moteur (3) et au moins une roue dudit véhicule (4). Il comprend un régulateur (15) sensible à des grandeurs représentatives du fonctionnement du moteur (3) et dudit mécanisme de transmission ainsi qu'à l'enfoncement d'une pédale (12) d'accélérateur pour délivrer continûment une consigne de couple moteur (Cons_cm1) et une consigne de couple transmis (Cons_ct2) à des moyens (16) de gestion du collage des disques (6) et à des moyens (17) de calcul de la position (xbut) de la butée respectivement, ces moyens (16) et (17) commandant respectivement les moyens (2) et (5).

FIG.:2

EP 1 072 459 A1

**EP 1 072 459 A1**

## Description

La présente invention est relative à un dispositif de commande du démarrage d'un véhicule automobile propulsé par un moteur à combustion interne et, plus particulièrement, à un tel dispositif comprenant des moyens d'asservissement du couple délivré par ledit moteur et des moyens de pilotage d'un embrayage à disque(s) et butée formant partie d'un mécanisme de transmission d'énergie mécanique entre ledit moteur et les roues du véhicule.

On connaît un dispositif de ce type du document WO 98/58814. Au démarrage du véhicule, en particulier, l'embrayage piloté et le moteur sont commandés notamment en fonction de l'enfoncement d'une pédale d'accélérateur déterminé par le conducteur du véhicule, cet enfoncement étant interprété comme une demande concernant l'accélération ou la vitesse du véhicule.

Lorsque, lors d'un démarrage par exemple, le moteur est proche du calage, l'embrayage ne s'ouvre que si le régime du moteur descend au-dessous d'un seuil prédéterminé, le taux d'ouverture étant fonction de la dérivée du régime du moteur. L'embrayage se referme ensuite dès que le régime repasse au-dessus de ce seuil.

Cette stratégie n'est pas favorable au confort de conduite du véhicule du fait que le calage est empêché par une procédure d'urgence et non évité par une anticipation convenable.

A la fin de l'embrayage, quand les disques de celui-ci passe d'un état où ils glissent à un état où ils ne glissent plus, on observe classiquement un à-coup (dit "salut") dans le couple transmis aux roues du véhicule quand la synchronisation des arbres d'entrée et de sortie de l'embrayage n'est pas parfaite, à-coup qu'il convient évidemment de minimiser, toujours au bénéfice du confort de conduite.

Pour ce faire, WO 98/58814 propose de changer la consigne de couple moteur envoyé aux moyens d'asservissement de ce couple afin d'assurer un raccordement sans discontinuité des consignes applicables avant et après le "collage" des disques de l'embrayage. Du fait d'incertitudes sur la dynamique du contrôle du moteur et/ou d'embrayage en fonction de divers phénomènes (notamment du vieillissement ou de l'usure de ceux-ci), la commutation de consignes prévue par WO 98/58814 peut être inefficace pour éviter le "salut" évoqué ci-dessus.

Enfin, rien n'est prévu dans le dispositif du document WO 98/58814 pour minimiser l'usure du ou des disques de l'embrayage lors du démarrage du véhicule alors que c'est cette usure qui est la première cause de limitation de la durée de vie de ceux-ci.

La présente invention a précisément pour but de réaliser un dispositif de commande du démarrage d'un véhicule automobile, du type décrit en préambule de la présente description, conçu de manière à 1) limiter au minimum l'usure des disques de l'embrayage lors d'un tel démarrage, 2) supprimer le phénomène de "salut" au collage de ces disques et 3) plus généralement, améliorer le confort de conduite du véhicule par une anticipation convenable du phénomène de calage du moteur, lors d'un démarrage du véhicule.

On atteint ce but de l'invention, ainsi que d'autres qui apparaîtront à la lecture de la description qui va suivre, avec un dispositif de commande du démarrage d'un véhicule automobile propulsé par un moteur à combustion interne comprenant des moyens d'asservissement du couple délivré par ledit moteur et des moyens de pilotage de l'embrayage à disques et butée formant partie d'un mécanisme de transmission d'énergie mécanique entre ledit moteur et au moins une roue dudit véhicule, ce dispositif étant remarquable en ce qu'il comprend un régulateur sensible à des grandeurs représentatives du fonctionnement du moteur et dudit mécanisme de transmission ainsi qu'à l'enfoncement d'une pédale d'accélérateur commandée par le conducteur du véhicule pour, lors d'une phase de démarrage dudit véhicule, délivrer continûment une consigne de couple moteur Cons_cn1 et une consigne de couple transmis Cons_ct2 à des moyens de gestion du collage du ou des disques dudit embrayage et à des moyens de calcul de la position de ladite butée respectivement, ces moyens de gestion et de calcul commandant respectivement lesdits moyens d'asservissement et lesdits moyens de pilotage.

Suivant une autre caractéristique de la présente invention, le régulateur est un régulateur multivariable linéaire dont la sortie u (Cons_cm1, Cons_Ct2) est liée à un vecteur d'état (x) par la relation u = K(xref - x) où xref est un vecteur d'état de référence et K une matrice 2xn, n étant la dimension du vecteur d'état (x).

Comme on le verra plus loin en détail, le démarrage (ou "décollage") du véhicule est ainsi géré par un régulateur unique qui tient compte de façon linéaire de toutes les variables du système. Les performances de la régulation sont meilleures que celles obtenues par l'utilisation de deux régulateurs monovariables distincts affectés au moteur et à l'embrayage respectivement, qui ne peuvent tenir compte des couplage physiques des grandeurs qu'ils régulent. La prise en compte de ces couplages permet de ralentir l'usure des disques de l'embrayage et donc d'allonger la durée de vie de celui-ci, conformément à l'un des buts de l'invention énoncés ci-dessus.

D'autres caractéristiques et avantages de la présente invention apparaîtront à la lecture de la description qui va suivre et à l'examen du dessin annexé dans lequel :

- la figure 1 est un schéma général du dispositif de démarrage de véhicule automobile suivant l'invention,
- la figure 2 est un diagramme fonctionnel d'une loi de gestion de ce démarrage exécutée par le calculateur formant partie du dispositif de la figure 1, et

2

- les figures 3 à 5 sont des graphes illustrant des cartographies utilisées par le calculateur de la figure 2.

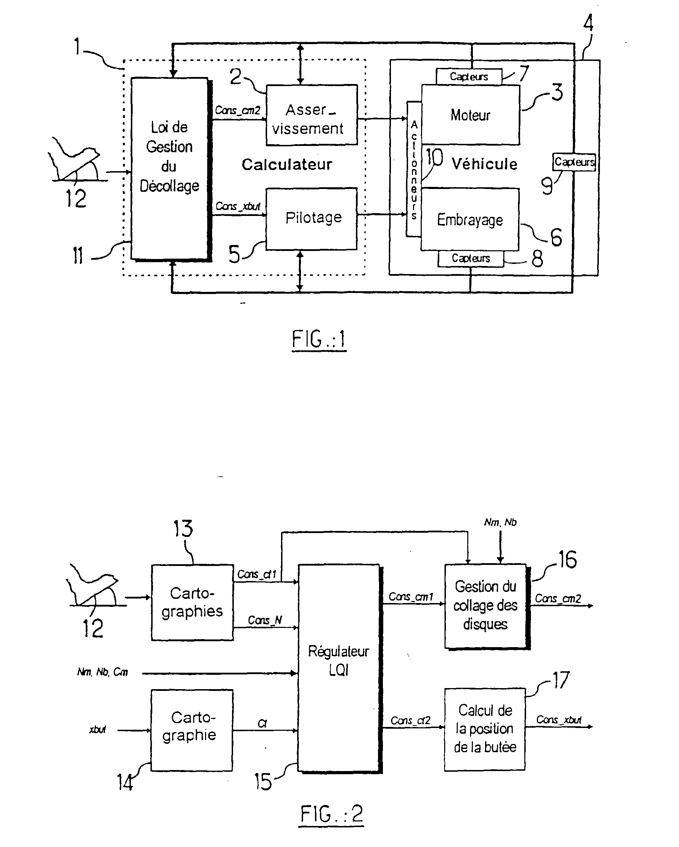

On se réfère à la figure 1 du dessin annexé où il apparaît que le dispositif suivant l'invention comprend essentiellement un calculateur 1, dûment programmé pour incorporer des moyens logiciels 2 d'asservissement du couple délivré par un moteur 3 à combustion interne propulsant un véhicule automobile 4, et des moyens logiciels 5 de pilotage de la position de la butée d'un embrayage montée entre l'arbre de sortie du moteur 3 et l'arbre primaire (ou d'entrée) d'une boîte de vitesses (non représentée), cet embrayage et cette boîte de vitesses formant partie du mécanisme de transmission du véhicule automobile 4.

Des capteurs 7,8,9 sont associés classiquement au moteur 3 et à l'embrayage 6, ou à ces deux derniers (les capteurs 9) pour fournir au calculateur 1 des mesures de différentes grandeurs représentatives du fonctionnement de ceux-ci, telles que le régime Nm du moteur 1, celui Nb de l'arbre primaire de la boîte de vitesses, la position xbut de la butée de l'embrayage, etc...

Des actionneurs 10 commandés par les moyens logiciels 2 et 5 permettent d'agir sur le fonctionnement du moteur 3 et sur la position de la butée de l'embrayage 6 de manière à asservir le couple délivré par le moteur et celui transmis par l'embrayage à des valeurs de consigne établies par ces moyens logiciels.

Le calculateur 1 du dispositif suivant l'invention est également dûment programmé pour exécuter une loi de gestion du démarrage (ou du décollage) du véhicule permettant d'établir une consigne de couple moteur et une consigne de position de la butée de l'embrayage fournies aux moyens logiciels 2 et 5 respectivement, ces consignes étant calculées pour atteindre les buts de la présente invention énoncées ci-dessus, à partir d'informations reçues des capteurs 7,8,9, des moyens logiciels 2 et 5 et d'un capteur de l'enfoncement d'une pédale 12 d'accélérateur, actionnée par le conducteur du véhicule.

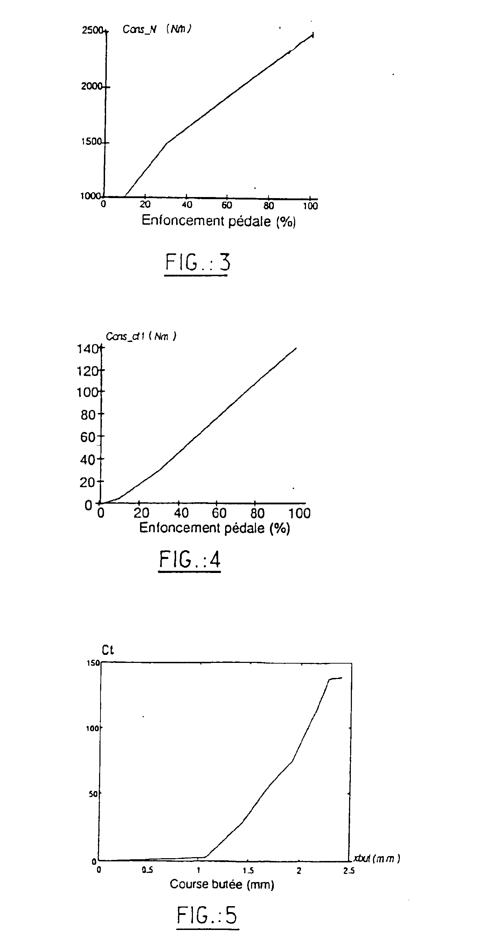

Cette loi de gestion est mise en oeuvre par une pluralité de blocs fonctionnels globalement repérés 11 à la figure 1 dans le calculateur 1, et représentés chacun à la figure 2, à laquelle on se réfère maintenant pour décrire la loi en plus de détails.

L'enfoncement de la pédale d'accélérateur 12 traduit la demande en couple transmis à la boîte de vitesses par l'embrayage, formulée par le conducteur du véhicule. Des cartographies 13 (voir figures 3 et 4) mises en mémoire dans le calculateur 1 permettent de tirer de cet enfoncement une consigne Cons_ct1 de couple transmis à la boîte de vitesses et une consigne Cons_N de régime du moteur. Les figures 3 et 4 illustrent, à titre d'exemple illustratif et non limitatif seulement, l'allure des cartographies des consignes Cons_N et Cons_ct1 en fonction du pourcentage d'enfoncement de la pédale 12.

Le couple Ct transmis par l'embrayage peut être connu par une mesure réalisée par un couplemètre matériel ou par une estimation réalisée à l'aide d'un couplemètre logiciel.

Suivant un mode de réalisation préféré de la présente invention, l'estimation de ce couple est réalisée à l'aide d'une cartographie 14 dont l'entrée est la position xbut de la butée de l'embrayage 6, un exemple d'une telle cartographie relative à un embrayage "monodisque" étant donné à la figure 5, à titre d'exemple illustratif et non limitatif seulement.

Le régulateur 15 de la figure 2 symbolise le régulateur proprement dit du dispositif suivant l'invention, qui calcule une consigne de couple moteur Cons_cm1 et une consigne de couple transmis Cons_ct2 envoyées respectivement à un bloc de gestion 16 du collage des disques de l'embrayage 6 et à un bloc de calcul 17 de la position de la butée de l'embrayage 6. Pour ce faire, le régulateur 15 est, suivant un mode de réalisation préféré de l'invention, un régulateur multivariable linéaire qui exploite des informations tirées des cartographies 13 et 14, soit les valeurs de Cons_ct1, Cons_N et Ct venues de ces cartographies, ainsi que des variables d'état Nm, Nb, Cm (couple moteur), Ct (couple transmis) délivrées par les capteurs de mesure 7,8,9 ou, éventuellement, par des moyens d'estimation en ce qui concerne les couples.

Suivant une autre caractéristique de la présente invention, le régulateur 15 est du type LQ et, plus préférablement, du type LQI qui améliore les performances du régulateur LQ en ce qui concerne le rejet des perturbations. Dans le cas d'un régulateur du type LQI, le régulateur 15 exploite, outre les variables d'état mentionnées ci-dessus, des intégrales de certaines de ces variables, de préférence les variables Ct et Nm. C'est ainsi que le vecteur d'état x à réguler est, suivant une mise en oeuvre préférée de l'invention :

$$x=[Nm, Nb, Cm, Ct, \int Ctdt, \int Nmdt]^T$$

La sortie u du régulateur, de composantes Cons_cm1 et Cons_ct2, est alors liée à x par la relation

$$u=K(xref-x)$$

où

$$xref= [Cons\_N, Cons\_N, Cons\_ct1, Cons\_ct1, \int Cons\_ct1dt, \int Cons\_Ndt]^{T}$$

et K est un gain représenté par une matrice 2 x n, avec n = 6, dimension du vecteur x.

Suivant encore une autre caractéristique de la présente invention, le bloc de gestion 16 du collage des disques de l'embrayage gère la transition entre le suivi des consignes Cons_cm1 (consigne de couple moteur pendant la phase de glissement des disques) et Cons_ct1 (consignes de couple hors phase de démarrage du véhicule, après collage des disques de l'embrayage), en fonction du glissement (Nm - Nb) des disques. Pour ce faire, le bloc 16 adresse aux moyens 2 d'asservissement du couple moteur une consigne Cons_cm2 telle que :

$$Cons\_cm2 = \left(1 - \frac{min(Nm - Nb, seuil\_gliss)}{seuil\_gliss}\right) Cons\_ct1 + \frac{min(Nm - Nb, seuil\_gliss)}{seuil\_gliss} Cons\_cm1$$

où (seuil_gliss) est un seuil de glissement prédéterminé à partir duquel s'opère la transition annoncée ci-dessus.

On remarquera que la forme de cette relation est telle que, pendant cette transition, on passe linéairement et sans discontinuité, donc de façon continue, du suivi de la consigne de couple moteur Cons_cm1, calculée pour gérer la phase pendant laquelle les disques de l'embrayage 6 glissent, au suivi de la consigne Cons_ct1, représentative de la demande en couple du conducteur du véhicule une fois la transition terminée. On supprime ainsi le phénomène du "salut" évoqué plus haut, en améliorant du même coup le confort de conduite du véhicule.

Suivant encore une autre caractéristique de la présente invention, l'utilisation d'un régulateur du type LQ, ou préférablement LQI, permet par une synthèse convenable de la correction à mettre en oeuvre, de minimiser un critère quadratique contenant un terme proportionnel à l'énergie dissipée dans l'embrayage. Ce point sera développé dans la suite, après le rappel qui va suivre sur la régulation LQI, nécessaire à la compréhension de la description de son application au dispositif suivant la présente invention .

Soit le système linéaire stationnaire de représentation d'état $\dot{x}(t) = Ax(t) + Bu(t)$ où x est un vecteur d'état (de dimension n), u un vecteur de commande (de dimension m), A et B des matrices d'entrée (dim. n X m) et d'état (dim. n X n), respectivement.

Suivant l'approche LQI, on considère non plus le vecteur d'état x mais le vecteur augmenté xi = $[x,xs]^{T}$ où xs est un vecteur composé des intégrales temporelles de p états du système (dim.p).

Les nouvelles matrices Ai et Bi s'écrivent :

$$Ai = \begin{bmatrix} A & 0_{nxp} \\ \hline As & \end{bmatrix}, \quad Bi = B \quad 0_{pxm}$$

où As est la matrice p x(n+p) telle que : xs(t) = Asx(t).

Cet artifice améliore la classique régulation LQ qui peut parfois mener à des performances statiques limitées (par exemple en rejet de perturbations).

Le régulateur LQI est le retour d'état u(t) = - Kxi(t) qui réalise la minimisation du critère quadratique :

$$J = \int_{0}^{\infty} (xi(t)^{T}Qxi(t) + u(t)^{T}Ru(t))dt \qquad (1)$$

La gain K = $R^{-1}Bi^{T}P$ du correcteur est déterminé à partir de la résolution de l'équation de Riccati :

$$PAi + Ai^{T}P - PBiR^{-1}.Bi^{T}P + Q = 0 \qquad (2)$$

qui donne P, par exemple à l'aide d'algorithmes qui résolvent cette équation de manière récursive.

Le réglage des matrices de pondération R et Q permet de déterminer les caractéristiques de performances et de robustesse de la régulation.

On remarquera que le calcul du régulateur se fait hors-ligne et une fois pour toutes. Le gain K résultant est donc constant.

On va maintenant introduire un tel régulateur LQI dans le système : moteur + contrôleur moteur + embrayage + commande de l'embrayage + véhicule, qui peut être linéarisé autour d'un point de fonctionnement.

On choisit pour cela les variables d'état Nm,Nb,Cm,Ct et on fait les hypothèses suivantes sur le système :

1. les dynamiques de la commande en couple du moteur et de la commande en position d'un vérin de commande de la position de la butée d'embrayage, sont du premier ordre et de constantes de temps $\tau cc$ et $\tau v$ ;
2. l'embrayage est caractérisé par une transmission de couple par frottements secs de type Coulomb dont on connaît la caractéristique en fonction de la position de la butée d'embrayage ;
3. la masse du véhicule Mv, l'inertie de l'arbre moteur Jm, le rapport de transmission entre le régime boîte et la vitesse du véhicule KTrans et la caractéristique linéarisée des efforts Fres = aV + b résistant à l'avancement du véhicule sont connus.

Les équations de la dynamique donnent donc les matrices d'état A et B de sorte que $\dot{x} = Ax + Bu$, u étant le vecteur de commande (Cons_cm1 et Cons_ct2) et où :

$$A = \begin{bmatrix} 0 & 0 & 30/(\pi J_m) & -30/(\pi J_m) \\ 0 & -a/M_v & 0 & 30K_{Trans}^2/\pi M_v \\ 0 & 0 & -1/\tau_{cc} & 0 \\ 0 & 0 & 0 & -1/\tau_v \end{bmatrix} \qquad B = \begin{bmatrix} 0 & 0 \\ 0 & 0 \\ 1/\tau_{cc} & 0 \\ 0 & 1/\tau_v \end{bmatrix}$$

D'autre part, les variables du système à asservir avec précision étant le régime moteur Nm et le couple transmis par l'embrayage Ct, on introduit leurs intégrales temporelles dans le vecteur d'état x = [Nm,Nb,Cm,Ct, ∫ Ctdt, ∫ Nmdt]$^T$.

La matrice As s'écrit donc

$$As = \begin{bmatrix} 0 & 0 & 0 & 1 & 0 & 0 \\ 1 & 0 & 0 & 0 & 0 & 0 \end{bmatrix}.$$

On en déduit les nouvelles matrices Ai et Bi dont la structure est explicitée ci-dessus.

La matrice de pondération Q de l'équation (2) ci-dessus est d'abord considérée comme diagonale, définie et positive. Les éléments de la diagonale correspondent à l'efficacité de l'asservissement de chaque variable d'état.

D'autre part, le réglage de la matrice de pondération R peut être vu comme pondérant l'énergie moyenne des commandes.

Les performances de régulation sont donc réglées à travers les pondérations Q et R, comme indiqué plus haut.

La forme quadratique du critère J (équation (1) ci-dessus) permet d'y introduire l'énergie dissipée dans l'embrayage E, calculée à partir de l'expression suivante :

$$E = \int_0^\infty Ct(Nm - Nb)dt$$

E résulte donc d'un couplage entre le couple transmis par l'embrayage et le glissement des disques.

Soit la matrice $Q_E$ (dim. 6x6) suivante :

$$Q_E = \begin{bmatrix} 0_{3,3} & \Gamma \\ \Gamma^T & 0_{3,3} \end{bmatrix} \qquad \text{avec} \quad \Gamma = \begin{bmatrix} 1/2 & 0 & 0 \\ -1/2 & 0 & 0 \\ 0 & 0 & 0 \end{bmatrix}$$

L'énergie dissipée dans l'embrayage peut alors s'écrire :

$$E = \int_0^\infty x^T Q_E x \, dt$$

Pour que le correcteur tienne compte de l'énergie dissipée relativement à une pondération $\gamma$, il suffit donc de construire le critère J' suivant :

$$J' = J + \gamma E = \int_0^\infty (x^T(Q + \gamma Q_E)x + u^T Ru) dt$$

Par conséquent, le correcteur synthétisé de façon à minimiser le critère J' minimise aussi, en proportion de la pondération $\gamma$, l'énergie dissipée dans l'embrayage.

Il apparaît maintenant que la présente invention permet bien d'atteindre les buts annoncés, à savoir accroître la durée de vie de l'embrayage en limitant l'énergie dissipée par frottements dans l'embrayage lors des phases de démarrage du véhicule, supprimer les à-coups de "salut" autrement observés au collage des disques de l'embrayage et, plus généralement, améliorer le confort de conduite du véhicule par l'utilisation d'un régulateur unique, multivariable et linéaire, préférablement du type LQI, gérant la phase de glissement des disques en donnant des consignes de couple moteur et de couple transmis en fonction d'un groupe de grandeurs représentatives de l'état de l'ensemble du système (moteur + transmission) à commander.

## Revendications

1. Dispositif de commande du démarrage d'un véhicule automobile (4) propulsé par un moteur (3) à combustion interne comprenant des moyens d'asservissement (2) du couple délivré par ledit moteur (3) et des moyens de pilotage d'un embrayage (6) à disques et butée formant partie d'un mécanisme de transmission d'énergie mécanique entre ledit moteur (3) et au moins une roue dudit véhicule (4), caractérisé en ce qu'il comprend un régulateur (15) sensible à des grandeurs représentatives du fonctionnement du moteur (3) et dudit mécanisme de transmission ainsi qu'à l'enfoncement d'une pédale (12) d'accélérateur commandée par le conducteur du véhicule (4) pour, lors d'une phase de démarrage dudit véhicule, délivrer continûment une consigne de couple moteur (Cons_cm1) et une consigne de couple transmis (Cons_ct2) à des moyens (16) de gestion du collage du ou des disques dudit embrayage (6) et à des moyens (17) de calcul de la position (xbut) de ladite butée respectivement, ces moyens (16) et (17) commandant respectivement lesdits moyens d'asservissement (2) et lesdits moyens de pilotage (5).

2. Dispositif conforme à la revendication 1, caractérisé en ce que ledit régulateur (15) est un régulateur multivariable linéaire dont la sortie u (Cons_cm1, Cons_ct2) est liée à un vecteur d'état (x) par la relation u = K(xref - x) où xref est un vecteur d'état de référence et K une matrice 2 x n, n étant la dimension du vecteur d'état (x).

3. Dispositif conforme à la revendication 2, caractérisé en ce que ladite matrice K est à coefficients constants et synthétise un correcteur du type LQ.

4. Dispositif conforme à la revendication 2, caractérisé en ce que ladite matrice K est à coefficients constants et synthétise un correcteur du type LQI.

5. Dispositif conforme à la revendication 4, caractérisé en ce que les composantes du vecteur d'état (x) sont choisies dans le groupe constitué par le régime (Nm) du moteur, le régime (Nb) de l'arbre primaire d'une boîte de vitesses formant partie dudit mécanisme de transmission, le couple moteur (Cm), le couple transmis (Ct), l'intégrale ($\int$Nmdt) du régime moteur, l'intégrale ($\int$Ctdt) du couple transmis.

6. Dispositif conforme à la revendication 3; caractérisé en ce que le vecteur d'état (x) est de la forme

$$X = \left[ Nm, Nb, Cm, Ct, \int Ctdt, \int Nmdt \right]^{T}$$

**7.** Dispositif conforme à l'une quelconque des revendications 4 à 6, caractérisé en ce que le régulateur (15) comprend des moyens pour minimiser continûment l'énergie dissipée dans l'embrayage.

**8.** Dispositif conforme à l'une quelconque des revendications précédentes, caractérisé en ce que, quand le glissement desdits disques passe en dessous d'un seuil (seuil_gliss) les moyens de gestion (16) du collage des disques calcule une consigne de couple moteur (Cons_cm2) telle que :

$$Cons\_cm2 = \left( 1 - \frac{\min(Nm - Nb, seuil\_gliss)}{seuil\_gliss} \right) Cons\_ct1 + \frac{\min(Nm - nb, seuil\_gliss)}{seuil\_gliss} Cons\_cm1$$

où Nm et Nb sont le régime du moteur et le régime de l'arbre primaire d'une boîte de vitesses formant partie dudit mécanisme de transmission, respectivement, Cons_ct1 une consigne de couple transmis fonction de l'enfoncement de la pédale (12) d'accélérateur.

FIG.:1

FIG.:2

FIG.: 3

FIG.: 4

FIG.: 5

**Office européen des brevets**

**RAPPORT DE RECHERCHE EUROPEENNE**

Numéro de la demande

EP 00 40 2075

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 44 34 111 A (KONGSBERG AUTOMOTIVE TECHNOLOG) 28 mars 1996 (1996-03-28) * abrégé; figures 1,5 * * page 3, ligne 49 – page 5, ligne 1 * | 1 | B60K41/02 F16D48/08 |
| A | DE 38 31 449 A (MAN NUTZFAHRZEUGE AG ;MAN TECHNOLOGIE GMBH (DE)) 22 mars 1990 (1990-03-22) * colonne 1, ligne 38 – ligne 47; figures 1,2 * | 1 | |
| D,A | DE 197 26 214 A (BOSCH GMBH ROBERT) 24 décembre 1998 (1998-12-24) * le document en entier * | 1 | |
| A | EP 0 328 299 A (EATON CORP) 16 août 1989 (1989-08-16) * colonne 2, ligne 21 – colonne 3, ligne 19; figure 1 * | 1 | |
| A | SLICKER J M ET AL: "DESIGN OF ROBUST VEHICLE LAUNCH CONTROL SYSTEM" IEEE TRANSACTIONS ON CONTROL SYSTEMS TECHNOLOGY,US,IEEE INC. NEW YORK, vol. 4, no. 4, 1 juillet 1996 (1996-07-01), pages 326-335, XP000591088 ISSN: 1063-6536 * abrégé * * colonne 3, ligne 12 * | 1 | DOMAINES TECHNIQUES RECHERCHES (Int.Cl.7) B60K F16D |

Le présent rapport a été établi pour toutes les revendications

| Lieu de la recherche | Date d'achèvement de la recherche | Examinateur |
|---|---|---|
| LA HAYE | 18 octobre 2000 | Wagner, H |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 2075

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-10-2000

| Document brevet cité au rapport de recherche | | Date de publication | Membre(s) de la famille de brevet(s) | | Date de publication |
|---|---|---|---|---|---|
| DE 4434111 | A | 28-03-1996 | AU | 3398395 A | 09-04-1996 |
| | | | CN | 1171084 A | 21-01-1998 |
| | | | DE | 59504354 D | 07-01-1999 |
| | | | EP | 0781214 A | 02-07-1997 |
| | | | WO | 9609184 A | 28-03-1996 |
| | | | JP | 11503382 T | 26-03-1999 |
| | | | US | 5993355 A | 30-11-1999 |
| DE 3831449 | A | 22-03-1990 | AUCUN | | |
| DE 19726214 | A | 24-12-1998 | WO | 9858814 A | 30-12-1998 |
| | | | EP | 0918657 A | 02-06-1999 |
| EP 0328299 | A | 16-08-1989 | US | 4874070 A | 17-10-1989 |
| | | | DE | 68910344 D | 09-12-1993 |
| | | | DE | 68910344 T | 26-05-1994 |

EPO FORM P0460

Pour tout renseignement concernant cette annexe : voir Journal Officiel de l'Office européen des brevets, No.12/82